# EUROPEAN PATENT APPLICATION

(11) **EP 4 794 446 A1**
(43) Date of publication of application: **19.08.2026**
(21) Application number: 24884540.6
(22) Date of filing: 23.10.2024
(51) Int. Cl.: H04W 76/28

(54) **TRANSMISSION INDICATION METHOD AND APPARATUS, COMMUNICATION DEVICE, AND STORAGE MEDIUM**

(30) Priority: 31.10.2023 CN 202311440438
(71) Applicant: HUAWEI TECHNOLOGIES CO., LTD., Shenzhen, Guangdong 518129 (CN)
(72) Inventor: TIE, Xiaolei, Shenzhen, Guangdong 518129 (CN)
(74) Representative: Goddar, Heinz J.
(86) International application number: PCT/CN2024/126708
(87) International publication number: WO 2025/092536

(57) **Abstract**

This application discloses a transmission indication method and apparatus, a communication device, and a storage medium, and pertains to the field of communication technologies. In this application, a network device may send first indication information to a terminal in a non-connected mode, to indicate that a DRX function and/or a DTX function of a first cell in which the terminal is located are/is enabled or disabled. In this way, the terminal in the non-connected mode may perform transmission of other indication information or data with the network device based on the first indication information. It can be learned that in this application, cell DRX and/or cell DTX are/is indicated to the terminal in the non-connected mode, to reduce power consumption when the network device performs data transmission with the terminal in the non-connected mode.

## Description

This application claims priority to Chinese Patent Application No. 202311440438.7, filed with the China National Intellectual Property Administration on October 31, 2023 and entitled "TRANSMISSION INDICATION METHOD AND APPARATUS, COMMUNICATION DEVICE, AND STORAGE MEDIUM", which is incorporated herein by reference in its entirety.

### TECHNICAL FIELD

This application relates to the field of communication technologies, and in particular, to a transmission indication method and apparatus, a communication device, and a storage medium.

### BACKGROUND

A 5G communication system supports a larger bandwidth and more antennas. In this case, it is quite important to reduce power consumption of both a network device and a terminal in the 5G communication system. Currently, a terminal may receive data by using a connected-mode discontinuous reception (connected-mode discontinuous reception, C-DRX) mechanism, to reduce power consumption of the terminal. A network device may receive and send data by using a cell discontinuous reception (discontinuous reception, DRX) mechanism and a cell discontinuous transmission (discontinuous transmission, DTX) mechanism, to reduce power consumption of the network device.

### SUMMARY

This application provides a transmission indication method and apparatus, a communication device, and a storage medium, to reduce power consumption when a network device performs data transmission with a terminal in a non-connected mode.

To achieve the foregoing objective, this application uses the following technical solutions.

According to a first aspect, a transmission indication method is provided. The method includes: sending first indication information to a first terminal, where the first indication information indicates that a discontinuous reception DRX function and/or a discontinuous transmission DTX function of a first cell in which the first terminal is located are/is enabled or disabled, the first terminal is in a non-connected mode, and the non-connected mode includes an idle state and an inactive state.

In this application, a network device may send the first indication information to the terminal in the non-connected mode, to indicate that the DRX function and/or the DTX function of the first cell in which the terminal is located are/is enabled or disabled. In this way, the terminal in the non-connected mode may perform transmission of other indication information or data with the network device based on the first indication information. It can be learned that in this application, cell DRX and/or cell DTX are/is indicated to the terminal in the non-connected mode, to reduce power consumption when the network device performs data transmission with the terminal in the non-connected mode.

Optionally, an implementation process of sending the first indication information to the first terminal may include: sending PEI downlink control information (downlink control information, DCI) to the first terminal on a paging early indication (paging early indication, PEI) occasion corresponding to the first terminal, where the PEI DCI includes a transmission indication field, and the transmission indication field is used to carry the first indication information. A first time unit includes the PEI occasion.

In this application, the network device may reuse the PEI DCI to carry the first indication information. In this way, DCI overheads can be reduced. In addition, the terminal may obtain the first indication information by monitoring the PEI occasion, without additionally monitoring another occasion. This reduces power consumption of the terminal.

Optionally, before sending the first indication information to the first terminal, the method further includes: sending configuration information to the first terminal, where the configuration information indicates a start location and a length of the transmission indication field in the PEI DCI.

In this application, the network device may deliver the configuration information to the first terminal in advance, and indicate a location of the first indication information in the PEI DCI by using the configuration information. In this way, the first terminal can obtain the first indication information from the PEI DCI more accurately and quickly based on the configuration information.

Optionally, an implementation process of sending the first indication information to the first terminal may include: sending the first indication information to the first terminal in a first time unit, where a time difference between the first time unit and a second time unit is less than a preset time threshold, and the second time unit is a time unit in which a synchronization signal block (synchronization signal block, SSB) is sent.

In this application, the first time unit in which the network device sends the first indication information may be, to the greatest extent, close to the second time unit in which the SSB is sent. In other words, the time difference between the first time unit and the second time unit may be less than the preset time threshold. In this way, sending time of the network device may be centralized to the greatest extent, that is, the network device completes sending in a time period as short as possible, so that the sending is disabled in a time period as long as possible, to achieve a better energy saving effect.

Optionally, the first indication information further indicates a first receiving mode, at least two C-DRX modes are preconfigured for the first terminal, and the at least two C-DRX modes include the first receiving mode.

In this application, the network device may further indicate, to the first terminal by using the first indication information, a C-DRX mode to be used when the first terminal switches to a connected mode. In this way, once the first terminal switches to the connected mode, the first terminal may immediately enable the C-DRX mode indicated by the first indication information to receive data, without waiting for and monitoring a further indication of the network device. This reduces power consumption of the terminal.

According to a second aspect, a transmission indication method is provided. The method includes: receiving first indication information, where the first indication information indicates that a DRX function and/or a DTX function of a first cell in which a first terminal is located are/is enabled or disabled, the first terminal is in a non-connected mode, and the non-connected mode includes an idle state and an inactive state; and performing transmission of other indication information or data based on the first indication information.

In this application, the terminal in the non-connected mode may receive the first indication information sent by a network device, and perform transmission of the other indication information or the data with the network device based on an enabled state, indicated by the first indication information, of the DRX function and/or the DTX function of the first cell in which the terminal is located. It can be learned that in this application, cell DRX and/or cell DTX are/is indicated to the terminal in the non-connected mode, to reduce power consumption when the network device performs data transmission with the terminal in the non-connected mode.

Optionally, an implementation process of receiving the first indication information may include: receiving PEI downlink control information DCI on a paging early indication PEI occasion corresponding to the first terminal, where the PEI DCI includes a transmission indication field, and the transmission indication field is used to carry the first indication information.

In this application, the network device may reuse the PEI DCI to carry the first indication information. In this way, DCI overheads can be reduced. In addition, the terminal may obtain the first indication information by monitoring the PEI occasion, without additionally monitoring another occasion. This reduces power consumption of the terminal.

Optionally, the method further includes: receiving configuration information, where the configuration information indicates a start location and a length of the transmission indication field in the PEI DCI; and after receiving the PEI downlink control information DCI on the paging early indication PEI occasion corresponding to the first terminal, the method further includes: obtaining the first indication information from the PEI DCI based on the start location and the length of the transmission indication field.

In this application, the network device may deliver the configuration information to the first terminal in advance, and indicate a location of the first indication information in the PEI DCI by using the configuration information. In this way, the first terminal can obtain the first indication information from the PEI DCI more accurately and quickly based on the configuration information.

Optionally, an implementation process of receiving the first indication information may include: receiving the first indication information in a first time unit, where a time difference between the first time unit and a second time unit is less than a preset time threshold, and the second time unit is a time unit in which a synchronization signal block SSB is received.

In this application, the first time unit in which the network device sends the first indication information may be, to the greatest extent, close to the second time unit in which the SSB is sent. In other words, the time difference between the first time unit and the second time unit may be less than the preset time threshold. In this way, sending time of the network device may be centralized to the greatest extent, that is, the network device completes sending in a time period as short as possible, so that the sending is disabled in a time period as long as possible, to achieve a better energy saving effect. Correspondingly, the terminal may also perform signal monitoring in a centralized manner in a time period as short as possible, to not perform monitoring in a time period as long as possible, so as to achieve a better energy saving effect.

Optionally, an implementation process of performing transmission of the other indication information or the data based on the first indication information may include: if the first indication information indicates that the DRX function of the first cell is enabled, sending uplink data in active duration and skipping sending the uplink data in inactive duration of a DRX cycle of the first cell.

When the DRX function of the first cell is enabled, if the first terminal has to-be-sent data, the first terminal sends uplink data in the active duration of the DRX cycle of the first cell in a centralized manner, and does not send data in the inactive duration of the DRX cycle of the first cell. In this way, it can be better ensured that a service of the first terminal is not affected while energy saving is performed on the network device.

Optionally, the implementation process of performing transmission of the other indication information or the data based on the first indication information may include: if the first indication information indicates that the DTX function of the first cell is enabled, receiving the other indication information or downlink data in active duration and skipping receiving the other indication information or the downlink data in inactive duration of a DTX cycle of the first cell.

When the DTX function of the first cell is enabled, the first terminal may monitor in a centralized manner and receive a downlink signal in the active duration of the DTX cycle of the first cell, and not monitor the downlink signal in the inactive duration of the DTX cycle of the first cell. In this way, it can be better ensured that the service of the first terminal is not affected while energy saving is performed on the network device.

Optionally, the first indication information further indicates a first receiving mode, at least two connected-mode discontinuous reception C-DRX modes are preconfigured for the first terminal, and the at least two C-DRX modes include the first receiving mode.

Optionally, the implementation process of performing transmission of the other indication information or the data based on the first indication information may include: after the first terminal switches from the non-connected mode to a connected mode, receiving the downlink data or the other indication information based on the first receiving mode.

In this application, the first indication information may further indicate, to the first terminal, a C-DRX mode to be used when the first terminal switches to the connected mode. In this way, once the first terminal switches to the connected mode, the first terminal may immediately enable the C-DRX mode indicated by the first indication information to receive data, without waiting for and monitoring a further indication of the network device. This reduces power consumption of the terminal.

According to a third aspect, a transmission indication apparatus is provided. The transmission indication apparatus includes at least one module, and the at least one module is configured to perform the transmission indication method according to the first aspect or the second aspect.

According to a fourth aspect, a communication device is provided. The communication device includes a processor, and the processor is configured to execute at least one program instruction or code stored in a memory, to implement the transmission indication method according to the first aspect or the second aspect.

According to a fifth aspect, a computer-readable storage medium is provided. The computer-readable storage medium stores instructions, and when the instructions are run on a communication device, the communication device is enabled to perform the transmission indication method according to the first aspect or the second aspect.

According to a sixth aspect, a computer program product including instructions is provided. When the computer program product runs on a communication device, the communication device is enabled to perform the transmission indication method according to the first aspect or the second aspect.

Technical effects achieved by the third aspect, the fourth aspect, the fifth aspect, and the sixth aspect are similar to those achieved by corresponding technical means in the first aspect and the second aspect. Details are not described herein again.

In embodiments of this application, the network device may send the first indication information to the terminal in the non-connected mode, to indicate that the DRX function and/or the DTX function of the first cell in which the terminal is located are/is enabled or disabled. In this way, the terminal in the non-connected mode may perform transmission of the other indication information or the data with the network device based on the first indication information. It can be learned that in embodiments of this application, the cell DRX and/or the cell DTX are/is indicated to the terminal in the non-connected mode, to reduce power consumption when the network device performs data transmission with the terminal in the non-connected mode.

### BRIEF DESCRIPTION OF DRAWINGS

FIG. 1 is a diagram of a structure of a communication system according to an embodiment of this application;
FIG. 2 is a diagram of a structure of a terminal according to an embodiment of this application;
FIG. 3 is a diagram of a structure of a network device according to an embodiment of this application;
FIG. 4 is a flowchart of a transmission indication method according to an embodiment of this application;
FIG. 5 is a diagram of enabling and disabling a DTX function of a cell according to an embodiment of this application;
FIG. 6 is a diagram of a data structure of PEI DCI according to an embodiment of this application;
FIG. 7 is a flowchart of another transmission indication method according to an embodiment of this application;
FIG. 8 is a diagram of a structure of a transmission indication apparatus according to an embodiment of this application; and
FIG. 9 is a diagram of a structure of another transmission indication apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, an application scenario in embodiments of this application is first described.

In a communication system, especially in a 5G communication system, both terminal energy saving and network device energy saving are of great significance. Currently, a terminal may receive data by using a C-DRX mechanism, to reduce power consumption of the terminal. A network device may receive data by using a cell DRX mechanism and/or send data by using a cell DTX mechanism, to reduce power consumption of the network device. Currently, before the network device transmits data by using the cell DRX mechanism and/or the cell DTX mechanism, special-purpose downlink control information (downlink control information, DCI) may be first used to indicate a terminal that is in a connected mode and that is in coverage of a cell provided by the network device, so that the terminal in the connected mode may perform data transmission with the network device based on the cell DRX mechanism and/or the cell DTX mechanism.

However, in a network, there is not only the terminal in the connected mode, but also a terminal in a non-connected mode, for example, a terminal in an idle state or an inactive state. For the terminal in the non-connected mode, the network device may indicate, to the terminal in the non-connected mode by using the transmission indication method provided in embodiments of this application, related information of the cell DRX and/or the cell DTX, so that the terminal in the non-connected mode may send and receive data based on the related information of the cell DRX and/or DTX that are/is indicated by the network device, to reduce power consumption of the network device.

The following describes some terms in embodiments of this application.

### (1) C-DRX

C-DRX is a mechanism, proposed for terminal energy saving, in which a terminal in a connected mode receives data. Based on the C-DRX mechanism, a C-DRX cycle of the terminal includes active duration and inactive duration. In the active duration of the C-DRX cycle, the terminal monitors indication information and downlink data that are sent by a network device, for example, monitors a PDDCH and a PDSCH that are delivered by the network device. However, in the inactive duration of the C-DRX cycle, the terminal is in a sleep state, and does not monitor unicast scheduling information and scheduled downlink data that are sent on the PDCCH of the network device, to achieve an objective of reducing power consumption.

### (2) Cell DTX

Cell DTX is a mechanism, proposed for network device energy saving, in which a network device sends data. Based on the cell DTX mechanism, a DTX cycle of a specific cell provided by the network device includes active duration and inactive duration. In the active duration of the DTX cycle of the cell, the network device sends, in the cell, specific indication information (for example, unicast scheduling information) or downlink data to a terminal in signal coverage of the cell; and in the inactive duration of the DTX cycle of the cell, the network device does not send the specific indication information (for example, the unicast scheduling information) or the downlink data in the cell. In other words, by using the cell DTX mechanism, the network device may send, in the active duration in a centralized manner, to-be-sent data in the cell; and in the inactive duration, a network device like a base station associated with the cell enters a sleep state and does not send a related signal of the indication information or the downlink data, to achieve an objective of reducing power consumption.

### (3) Cell DRX

Cell DRX is a mechanism, proposed for network device energy saving, in which a network device receives data. Based on the cell DRX mechanism, a DRX cycle of a specific cell provided by the network device includes active duration and inactive duration. In the active duration of the DRX cycle of the cell, the network device receives, in the cell, an uplink signal sent by a terminal in signal coverage of the cell; and in the inactive duration of the DRX cycle of the cell, the network device does not receive the uplink signal in the cell. In other words, by using the cell DRX mechanism, the network device may receive the uplink signal in the active duration of the DRX cycle of the cell; and in the inactive duration, the cell enters a sleep state and does not receive the uplink signal, to achieve an objective of reducing power consumption.

The following describes a structure of a communication system related to a transmission indication method provided in embodiments of this application.

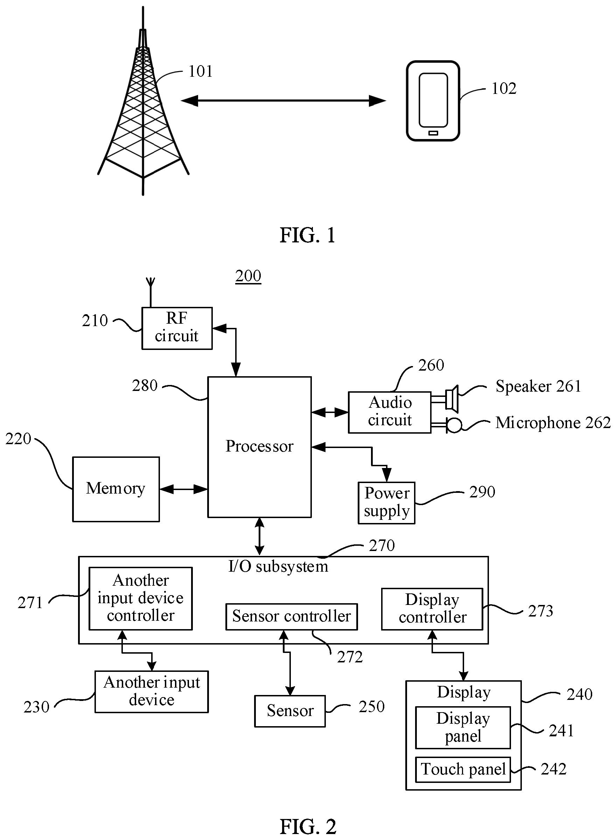

FIG. 1 is a diagram of a structure of a communication system according to an embodiment of this application. As shown in FIG. 1, the communication system includes a network device 101 and a terminal 102. A wireless communication connection is established between the network device 101 and the terminal 102.

In this embodiment of this application, the terminal 102 may be a terminal in a non-connected mode, for example, may be a terminal in an idle state or an inactive state. The network device 101 may send first indication information to the terminal 102. The first indication information indicates whether a DRX function and/or a DTX function of a cell in which the terminal 102 is located are/is enabled or disabled. After receiving the first indication information, the terminal 102 may receive other indication information or data based on the first indication information. It can be learned that in this embodiment of this application, cell DRX and/or cell DTX are/is indicated to the terminal in the non-connected mode, to reduce power consumption when the network device performs data transmission with the terminal in the non-connected mode.

It should be noted that the communication system may be a 5G NR communication system, a long term evolution (long term evolution, LTE) network, an enhanced long term evolution (enhanced long term evolution, eLTE) network, a universal mobile telecommunications system (universal mobile telecommunications system, UMTS), a code division multiple access (code division multiple access, CDMA) system, a wireless local area network (wireless local area network, WLAN), or the like, or may be a 6th generation (6th generation, 6G) communication system, another future-oriented communication system, or the like. In addition, the communication system provided in embodiments of this application may be used in a terrestrial network (terrestrial network, TN) and/or a non-terrestrial network (non-terrestrial network, NTN). This is not limited.

The network device 101 may be a base station (base station, BS) in a wireless communication system. The base station may be in a plurality of forms, for example, a macro base station, a micro base station, a relay station, and an access point. For example, when the communication system is a 5G NR communication system, the network device 101 may be a base station in 5G. The base station in 5G may also be referred to as a transmission reception point (transmission reception point, TRP) or a next generation NodeB (generation NodeB, gNB). When the communication system is an LTE communication system, the network device 101 may be an evolved NodeB (evolved NodeB, eNB). In embodiments of this application, an apparatus that is configured to implement a function of the network device may be a network device. Alternatively, an apparatus that can support the network device in implementing the function may be installed in the network device. For example, the apparatus is a chip system.

The terminal 102 is located in signal coverage of a cell provided by the network device 101. The terminal 102 may also be referred to as a terminal device, and is a device having a wireless transceiver function. The terminal 102 may be deployed on land, where the deployment includes indoor or outdoor, or handheld or vehicle-mounted deployment; or may be deployed on water (for example, on a ship); or may be deployed in the air (for example, on a plane, a balloon, or a satellite). The terminal 102 may be user equipment (user equipment, UE). The UE includes a handheld device, a vehicle-mounted device, a wearable device, or a compute device that has a wireless communication function. For example, the UE may be a mobile phone (mobile phone), a tablet computer, or a computer with a wireless transceiver function. The terminal 102 may alternatively be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus that is configured to implement a function of the terminal may be referred to as a terminal. Alternatively, an apparatus that can support the terminal in implementing the function may be installed in the terminal. For example, the apparatus may be a chip system. The chip system may include a chip, or may include a chip and another discrete device.

FIG. 2 is a diagram of a structure of a terminal according to an embodiment of this application. The terminal in embodiments of this application may be implemented by using the terminal 200 shown in FIG. 2. As shown in FIG. 2, the terminal 200 includes components such as a radio frequency (radio frequency, RF) circuit 210, a memory 220, another input device 230, a display 240, a sensor 250, an audio circuit 260, an I/O subsystem 270, a processor 280, and a power supply 290. It may be understood by a person skilled in the art that, the terminal structure shown in FIG. 2 does not constitute a limitation on the terminal, and the terminal may include more or fewer components than those shown in the figure, or some components may be combined, some components may be separated, or the components may be arranged in different manners. A person skilled in the art may understand that the display 240 belongs to a user interface (UI, User Interface), and the terminal 200 may include more or fewer user interfaces than those shown in the figure.

The following describes each component of the terminal 200 in detail with reference to FIG. 2.

The RF circuit 210 may be configured to receive and send information, or receive and send a signal in a call process. For example, after receiving downlink information from a base station, the RF circuit 210 may transmit the downlink information to the processor 280 for processing. In addition, the RF circuit 210 may further send uplink data to the base station. The RF circuit 210 usually includes but is not limited to an antenna, at least one amplifier, a transceiver, a coupler, a low noise amplifier (low noise amplifier, LNA), a duplexer, and the like.

The memory 220 may be configured to store a software program and a module, and the processor 280 executes various functional applications of the terminal 200 and processes data by running the software program and the module that are stored in the memory 220. For example, the memory 220 may store a program used to implement the technical solutions of this application, and the processor 280 may execute the program to implement the transmission indication method provided in embodiments of this application. The memory 220 may mainly include a program storage area and a data storage area. The program storage area may store an operating system, an application required by at least one function (for example, a sound play function or an image play function), and the like. The data storage area may store data (for example, audio data or a phone book) created based on use of the terminal 200, and the like. In addition, the memory 220 may include a high-speed random access memory, or may include a nonvolatile memory, for example, at least one magnetic disk storage device, a flash memory, or another volatile solid-state storage device.

The another input device 230 may be configured to receive entered digit or character information, and generate a button signal input related to user setting and function control of the terminal 200. For example, the another input device 230 may include but is not limited to one or more of a physical keyboard, a function button (such as a volume control button or an on/off button), a trackball, a mouse, a joystick, and an optical mouse (the optical mouse is a touch-sensitive surface that does not display a visual output, or an extension of a touch-sensitive surface formed by a touchscreen). The another input device 230 is connected to another input device controller 271 of the I/O subsystem 270, and performs signal interaction with the processor 280 under control of the another input device controller 271.

The display 240 may be configured to display information entered by a user or information provided for the user, and various menus of the terminal 200, and may further receive a user input. For example, the display 240 may include a display panel 241 and a touch panel 242. The display panel 241 may be configured by using a liquid crystal display (liquid crystal display, LCD), an organic light-emitting diode (organic light-emitting diode, OLED), or the like. The touch panel 242, also referred to as a touchscreen, a touch-sensitive screen, or the like, may collect a contact operation or a non-contact operation of a user on or near the touch panel 242, for example, an operation and a motion-sensing operation that are performed by the user on or near the touch panel 242 by using any suitable object or accessory like a finger or a stylus, and drive a corresponding connection apparatus based on a preset program. The foregoing operations include operation types such as a single-touch control operation and a multi-touch control operation. Optionally, the touch panel 242 may include two parts: a touch detection apparatus and a touch controller. The touch detection apparatus detects a touch orientation and a posture of the user, detects a signal brought by a touch operation, and transmits the signal to the touch controller. The touch controller receives touch information from the touch detection apparatus, converts the touch information into information that can be processed by the processor 280, and then sends the information to the processor 280. In addition, the touch controller may further receive and execute a command sent by the processor 280. In addition, the touch panel 242 may be implemented in a plurality of types such as a resistive type, a capacitive type, an infrared ray, and a surface acoustic wave, or the touch panel 242 may be implemented by using any technology developed in the future. Further, the touch panel 242 may cover the display panel 241. The user may perform, based on content displayed on the display panel 241, an operation on or near the touch panel 242 covered by the display panel 241. The content displayed on the display panel 241 includes but is not limited to a soft keyboard, a virtual mouse, a virtual button, an icon, and the like. After detecting an operation on or near the touch panel 242, the touch panel 242 transmits the operation to the processor 280 by using the I/O subsystem 270 to determine a user input, and then the processor 280 provides a corresponding visual output on the display panel 241 based on the user input by using the I/O subsystem 270. Although in FIG. 2, the touch panel 242 and the display panel 241 are used as two independent components to implement input and output functions of the terminal 200, in some embodiments, the touch panel 242 and the display panel 241 may be integrated to implement input and output functions of the terminal 200.

The terminal 200 may further include at least one type of sensor 250, for example, a light sensor, a motion sensor, and another sensor. Specifically, the light sensor may include an ambient light sensor and a proximity sensor. The ambient light sensor may adjust luminance of the display panel 241 based on brightness of ambient light. The proximity sensor may power off the display panel 241 and/or backlight when the terminal 200 moves to an ear. As a type of motion sensor, an accelerometer sensor may detect magnitudes of accelerations in various directions (usually, three axes), and detect a value and a direction of gravity when the accelerometer sensor is static; and may be used in an application for recognizing a terminal posture (for example, landscape-portrait mode switching, a related game, or magnetometer posture calibration), a function related to vibration recognition (for example, a pedometer or tapping), and the like. The terminal 200 may also be provided with other sensors such as a gyroscope, a barometer, a hygrometer, a thermometer, and an infrared sensor. Details are not described herein again.

The audio circuit 260, a speaker 261, and a microphone 262 may provide an audio interface between the user and the terminal 200. The audio circuit 260 may transmit, to the speaker 261, a signal converted from received audio data, and the speaker 261 converts the signal into a sound signal for output. In addition, the microphone 262 converts a collected sound signal and sends the converted signal to the audio circuit 260, and the audio circuit converts the received signal into audio data, and then outputs the audio data to the RF circuit 210 for sending to another terminal, or outputs the audio data to the memory 220 for further processing.

The I/O subsystem 270 is configured to control an input/output external device, and may include another input device controller 271, a sensor controller 272, and a display controller 273. Optionally, one or more other input device controllers 271 receive a signal from the another input device 230 and/or send a signal to the another input device 230. The another input device 230 may include a physical button, like a press button or a rocker button, a dial, a slide switch, a joystick, a click wheel, and an optical mouse. It should be noted that the another input device controller 271 may be connected to any one or more of the foregoing input devices. The display controller 273 in the I/O subsystem 270 receives a signal from the display 240 and/or sends a signal to the display 240. After the display 240 detects a user input, the display controller 273 converts the detected user input into interaction with a user interface object displayed on the display 240, to implement human-machine interaction. The sensor controller 272 may receive a signal from one or more sensors 250 and/or send a signal to one or more sensors 250.

The processor 280 is a control center of the terminal 200, connects to various parts of the entire terminal by using various interfaces and lines, and performs various functions of the terminal 200 and processes data by running or executing a software program and/or a module that are/is stored in the memory 220 and invoking data stored in the memory 220, to perform overall monitoring on the terminal. Optionally, the processor 280 may include one or more processing units. Preferably, an application processor and a modem processor may be integrated into the processor 280. The application processor mainly processes an operating system, a user interface, an application, and the like. The modem processor mainly processes wireless communication. It may be understood that the modem processor may not be integrated into the processor 280.

The terminal 200 may further include the power supply 290, for example, a battery, that supplies power to each component. Optionally, the power supply may be logically connected to the processor 280 by using a power supply management system, to implement functions such as charging management, discharging management, and power consumption management by using the power supply management system.

Although not shown, the terminal 200 may further include components such as a camera and a Bluetooth module. Details are not described in embodiments of this application.

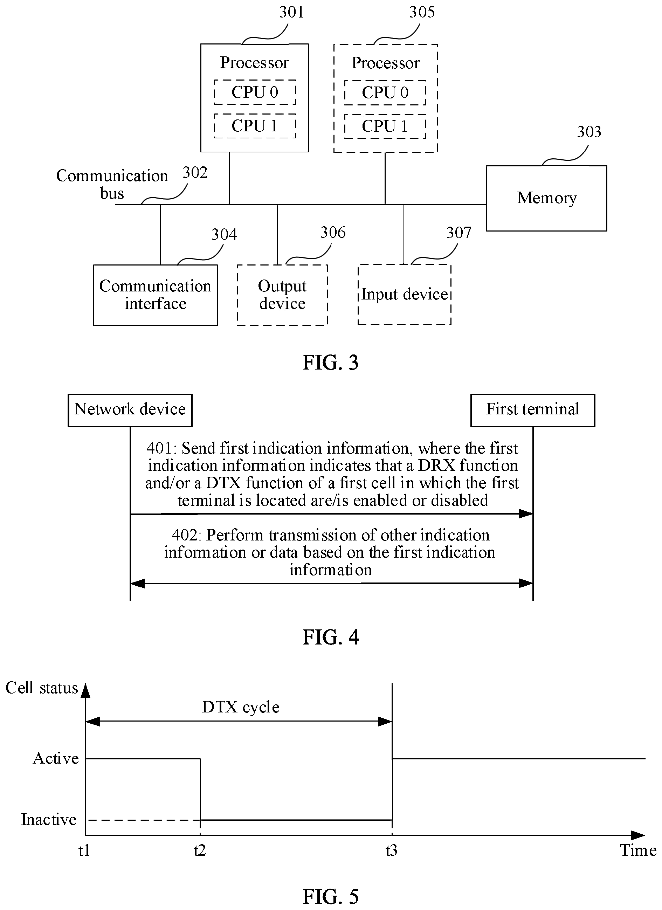

FIG. 3 is a diagram of a structure of a network device according to an embodiment of this application. A network device in embodiments of this application may be implemented by using the network device shown in FIG. 3. As shown in FIG. 3, the network device may include at least one processor 301, a communication bus 302, a memory 303, and at least one communication interface 304. It should be noted that the structure of the device shown in FIG. 3 does not constitute a limitation on the network device, and the network device may include more or fewer components than those shown in the figure, or some components may be combined, or the components may be arranged in different manners. This is not limited in embodiments of this application. The following describes each component of the network device in detail with reference to FIG. 3.

A processor 301 is a control center of the network device, and may be one processor or may be a general term of a plurality of processing elements. For example, the processor 301 may be a general-purpose central processing unit (Central Processing Unit, CPU), an application-specific integrated circuit (application-specific integrated circuit, ASIC), or one or more integrated circuits configured to control program execution of the solutions in this application, for example, one or more microprocessors (digital signal processors, DSPs) or one or more field programmable gate arrays (field programmable gate arrays, FPGAs). The processor 301 may perform various functions of the network device by running or executing a software program stored in the memory 303 and invoking data stored in the memory 303. For example, actions of the network device in embodiments described below may be performed by the processor of the network device by invoking data in the memory.

In an embodiment, the processor 301 may include one or more CPUs, for example, a CPU 0 and a CPU 1 in FIG. 3.

In an embodiment, the network device may include a plurality of processors, for example, the processor 301 and a processor 305 shown in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

The communication bus 302 may include a channel for transferring information between the foregoing components. The communication bus 302 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be categorized as an address bus, a data bus, a control bus, or the like. For ease of representation, only one thick line is used to represent the bus in FIG. 3, but this does not mean that there is only one bus or only one type of bus.

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory is not limited thereto. The memory 303 may exist independently, and is connected to the processor 301 by using the communication bus 302. The memory 303 may alternatively be integrated with the processor 301. The memory 303 is configured to store a software program for executing the solutions provided in embodiments of this application, and the processor 301 controls execution of the software program.

The communication interface 304 is configured to communicate with another device or a communication network, for example, an Ethernet, a RAN, or a wireless local area network (wireless local area network, WLAN). The communication interface 304 may include a receiving unit to implement a receiving function, and a sending unit to implement a sending function.

In an embodiment, the network device may further include an output device 306 and an input device 307. The output device 306 communicates with the processor 301, and may display information in a plurality of manners. For example, the output device 306 may be a liquid crystal display (liquid crystal display, LCD), a light-emitting diode (light-emitting diode, LED) display device, a cathode ray tube (cathode ray tube, CRT) display device, or a projector (projector). The input device 307 communicates with the processor 301, and may receive an input in a plurality of manners. For example, the input device 307 may be a mouse, a keyboard, a touchscreen device, or a sensing device.

The foregoing network device may be a general-purpose network device or a special-purpose network device, for example, may be a desktop computer, a portable computer, or a network server. This is not limited in embodiments of this application.

In the following, a transmission indication method provided in embodiments of this application is described in detail.

FIG. 4 is a flowchart of a transmission indication method according to an embodiment of this application. The method may be applied to the communication system described above. Refer to FIG. 4. The method includes the following steps.

Step 401: A network device sends first indication information to a first terminal, and the first terminal receives the first indication information, where the first indication information indicates that a DRX function and/or a DTX function of a first cell in which the first terminal is located are/is enabled or disabled.

In this embodiment of this application, before enabling or disabling the DRX function and/or the DTX function of the first cell, the network device may first send the first indication information to the first terminal in a non-connected mode in signal coverage of the first cell.

The first indication information may indicate that the DRX function and/or the DTX function of the first cell are/is enabled or disabled. The first cell may be any one of one or more cells provided by the network device. In addition, the first terminal is any terminal that is in a non-connected mode and that is in the signal coverage of the first cell, and there may be one or more first terminals.

For example, the first indication information may include cell information such as an identifier of the first cell and status indication information. The status indication information may include two bits. One bit indicates an enabled state of the DRX function, and the other bit indicates an enabled state of the DTX function. For example, in the two bits, a high-order bit indicates the enabled state of the DRX function, and a low-order bit indicates the enabled state of the DTX function. When a bit value is 1, it indicates "enabled"; or when the bit value is 0, it indicates "disabled". Based on this, when the status indication information is 00, it indicates that both the DRX function and the DTX function are disabled; when the status indication information is 01, it indicates that the DRX function is disabled and the DTX function is enabled; when the status indication information is 10, it indicates that the DRX function is enabled and the DTX function is disabled; or when the status indication information is 11, it indicates that both the DRX function and the DTX function are enabled.

Optionally, the first indication information may not include the cell information. In this case, the cell information may alternatively be implicitly or explicitly transmitted in another manner. This is not limited in this embodiment of this application.

Optionally, the status indication information in the first indication information may alternatively include only a bit that indicates the enabled state of the DRX function or a bit that indicates the enabled state of the DTX function.

Optionally, the network device may indicate, in a preconfiguration manner, that the status indication information in the first indication information includes only the bit that indicates the enabled state of the DRX function, or includes only the bit that indicates the enabled state of the DTX function, or includes both the bit that indicates the enabled state of the DRX function and the bit that indicates the enabled state of the DTX function.

Optionally, the network device may alternatively indicate, according to a protocol specification, that the status indication information in the first indication information includes only the bit that indicates the enabled state of the DRX function, or includes only the bit that indicates the enabled state of the DTX function, or includes both the bit that indicates the enabled state of the DRX function and the bit that indicates the enabled state of the DTX function.

Optionally, in this embodiment of this application, the status indication information in the first indication information may be used to indicate to activate one of DRX modes or configuration information a plurality of cells, and deactivate a DRX mode or configuration information of another cell. The DRX modes or the configuration information of the plurality of cells is indicated by the network device before the first indication information is sent. A DRX mode or configuration information of one cell indicates configured cell DRX active duration and configured cell DRX inactive duration.

Optionally, in this embodiment of this application, the status indication information in the first indication information may be further used to activate one of DTX modes or configuration information a plurality of cells, and deactivate a DTX mode or configuration information of another cell. The DTX modes or the configuration information of the plurality of cells is indicated by the network device before the first indication information is sent. A DTX mode or configuration information of one cell indicates configured cell DTX active duration and configured cell DTX inactive duration.

Optionally, the first indication information may further indicate a first receiving mode, and the first receiving mode is one of at least two C-DRX modes preconfigured for the first terminal. In other words, in this embodiment of this application, the network device may further indicate, to the first terminal in the coverage of the first cell by using the first indication information, the C-DRX mode used when the first terminal switches to a connected mode.

For example, the first indication information may further include C-DRX mode indication information, to indicate the first receiving mode. The C-DRX mode indication information may include one or more bits. For example, when there are two C-DRX modes preconfigured by the network device for the terminal that accesses the network device, the C-DRX mode indication information may include one bit. When a bit value is 0, it indicates that the first receiving mode used by the first terminal in the connected mode is a C-DRX mode 1; or when the bit value is 1, it indicates that the first receiving mode used by the first terminal in the connected mode is a C-DRX mode 2. Optionally, the C-DRX mode indication information may alternatively be a C-DRX mode identifier.

Optionally, in another example, the first indication information may further indicate a second receiving mode, and the second receiving mode may be one of at least two idle (idle)-state DRX modes preconfigured for the first terminal. The idle-state DRX mode may be used to indicate a paging cycle (paging cycle) of the terminal and a location of a corresponding paging occasion (paging occasion, PO) of the terminal. In other words, in this embodiment of this application, the network device may further indicate, to the first terminal in the coverage of the first cell by using the first indication information, a mode in which the first terminal monitors the PO, for example, a cycle and a location of the PO.

For example, the first indication information may further include idle-state DRX mode indication information or paging occasion indication information, to indicate the second receiving mode. The idle-state DRX mode indication information may include one or more bits. For example, when there are two idle-state DRX modes preconfigured by the network device for the terminal, the idle-state DRX mode indication information may include one bit. When a bit value is 0, it indicates that the second receiving mode used by the terminal in the non-connected mode in the cell is an idle-state DRX mode 1 (or indicates that the terminal in the non-connected mode in the cell receives paging by using a paging occasion set 1); or when the bit value is 1, it indicates that the second receiving mode used by the terminal in the non-connected mode in the cell is an idle-state DRX mode 2 (or indicates the terminal in the non-connected mode in the cell to receive paging by using a paging occasion set 2). Optionally, the idle-state DRX mode indication information may alternatively be an idle-state DRX mode identifier.

In addition, in this embodiment of this application, enabling the DRX function of the first cell means that the network device enables a discontinuous reception function of the first cell. The discontinuous reception function of the first cell means that the network device receives data in active duration and does not receive data in inactive duration of a DRX cycle of the first cell.

Disabling the DRX function of the first cell means that the network device disables the discontinuous reception function of the first cell. In other words, the network device may start to receive data in the first cell at any moment.

Enabling the DTX function of the first cell means that the network device enables a discontinuous transmission function of the first cell. The discontinuous transmission function of the first cell means that the network device sends data in active duration and does not send data in inactive duration of a DTX cycle of the first cell.

Disabling the DTX function of the first cell means that the network device disables the discontinuous transmission function of the first cell. In other words, the network device may start to send data in the first cell at any moment.

FIG. 5 is a diagram of enabling and disabling a DTX function of a cell according to an embodiment of this application. As shown in FIG. 5, at a moment t1, the network device enables the DTX function of the cell. In this way, the DTX cycle of the cell starts from the moment t1. The network device sends data in the cell in the active duration of the DTX cycle, that is, the moment t1 to a moment t2, and the network device does not send data in the cell in the inactive duration of the DTX cycle, that is, the moment t2 to a moment t3. At the moment t3, the network device disables the DTX function of the cell, and the network device may send data in the cell at any moment starting from the moment t3.

In a possible implementation, the network device may send the first indication information to the first terminal in a first time unit, where a time difference between the first time unit and a second time unit is less than a preset time threshold, and the second time unit is a time unit in which an SSB is sent. Correspondingly, the first terminal may receive the first indication information in the first time unit.

Specifically, the second time unit is located before the first time unit. In other words, after sending the SSB in the second time unit, the network device sends the first indication information to the first terminal in the first time unit. The time difference between the first time unit and the second time unit may be a difference obtained by subtracting an end moment of the second time unit from a start moment of the first time unit, or may be a difference obtained by subtracting a start moment of the second time unit from the start moment of the first time unit. The time unit mentioned in this embodiment of this application may include one or more time domain resources, and the time domain resource may be a slot, a mini-slot, or a subframe.

It should be noted that, for terminals in a non-connected mode in a network, although the network device does not send service data to the terminals, the network device further sends an SSB, a system information block (system information block, SIB), PEI DCI, a paging message, and the like to the terminals. Sending of the SSB is not affected by a DTX mechanism of the network device. In other words, regardless of whether the network device enables the DTX function of the first cell, the network device broadcasts the SSB at a fixed cycle based on an SSB broadcast mechanism. Based on this, in this embodiment of this application, the first time unit in which the network device sends the first indication information may be, to the greatest extent, close to the second time unit in which the SSB is sent. In other words, the time difference between the first time unit and the second time unit may be less than the preset time threshold. In this way, sending time of the network device may be centralized to the greatest extent, that is, the network device completes sending in a time period as short as possible, so that the sending is disabled in a time period as long as possible, to achieve a better energy saving effect.

In addition, the preset time threshold may be preconfigured in the network device, and a value of the preset time threshold may be set based on a requirement, to ensure that the first time unit is, to the greatest extent, close to the second time unit.

In this embodiment of this application, the first indication information sent by the network device in the first time unit may be carried by using special-purpose DCI. In this case, the first time unit may be a time domain resource allocated for sending the special-purpose DCI. In this case, the network device may deliver location information of the first time unit to the first terminal in advance. Alternatively, the location information of the first time unit may be statically preconfigured in the first terminal. Correspondingly, the first terminal may monitor, at a corresponding location based on the location information, the special-purpose DCI that carries the first indication information.

Optionally, when there is existing DCI in the first time unit, the network device may alternatively reuse the existing DCI in the first time unit to carry the first indication information. In this case, the first terminal may monitor, at a corresponding location based on location information of the existing DCI, the existing DCI that carries the first indication information.

In an example, the existing DCI may be PEI DCI. In other words, in this embodiment of this application, the network device may reuse the PEI DCI to carry the first indication information, and send the PEI DCI to the first terminal on a PEI occasion corresponding to the first terminal. In this case, the first time unit may include the PEI occasion. For example, the first time unit is the PEI occasion. Correspondingly, the first terminal may monitor and receive the PEI DCI on the PEI occasion corresponding to the first terminal.

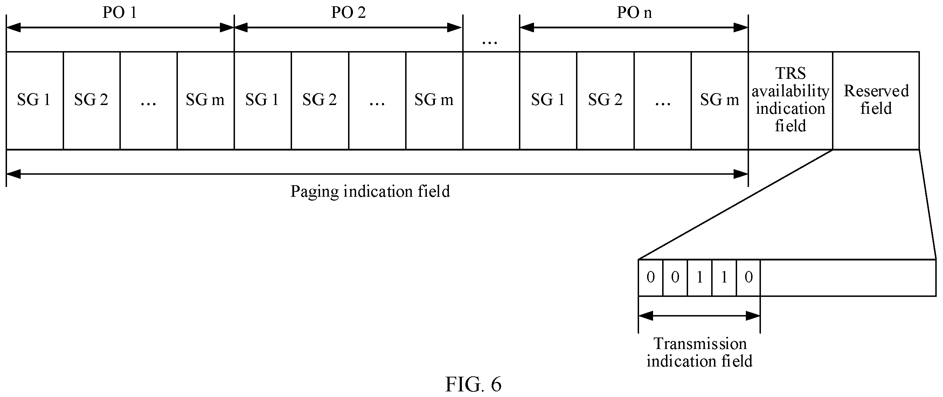

For example, as shown in FIG. 6, the PEI DCI includes a paging indication field (paging indication field), a tracking reference signal (tracking reference signal, TRS) availability indication field (availability indication field), and a reserved field.

The paging indication field may include paging indication information corresponding to each subgroup (subgroup) in each of a plurality of paging occasions (paging occasions, POs), and the paging indication information indicates whether a terminal belonging to a specific subgroup has a to-be-received paging message in an associated PO. For example, as shown in FIG. 6, the paging indication field includes paging indication information respectively corresponding to a plurality of subgroups in a PO 1 to a PO n. The plurality of subgroups include an SG 1 to an SG m. Based on this, in the paging indication field, a 1^{st} bit indicates paging indication information corresponding to the SG 1 in the PO 1, a 2^{nd} bit indicates paging indication information corresponding to the SG 2 in the PO 1, and by analogy, an m^{th} bit indicates paging indication information corresponding to the SG m in the PO 1. Next, starting from an (m+1)^{th} bit, is paging indication information corresponding to each subgroup in the PO 2, and the rest is by analogy. Based on this, after receiving the PEI DCI, a specific terminal may determine, in the paging indication field, a PO associated with the terminal and a bit corresponding to a subgroup to which the terminal belongs. For example, assuming that the PO associated with the terminal is the PO 1 and the subgroup to which the terminal belongs is the SG 2, it may be determined that the bit corresponding to the terminal in the paging indication field is the 2^{nd} bit. In this case, if the bit is a first value, it may be determined that the terminal has a to-be-received paging message on the next paging occasion PO 1 associated with the terminal; or if the bit is a second value, it may be determined that the terminal has no to-be-received paging message on the next paging occasion PO 1 associated with the terminal. The first value may be 1, and the second value may be 0.

The TRS availability indication field is used to indicate, to the terminal, whether a TRS is available, that is, used to indicate whether the terminal can use the TRS to replace the SSB to perform downlink synchronization before receiving a paging message on the PO.

The reserved field is a field that has not been defined and used. Based on this, in this embodiment of this application, some or all of reserved fields in the PEI DCI may be used as a transmission indication field, and the transmission indication field is used to carry the first indication information. For example, as shown in FIG. 6, the first indication information carried in the transmission indication field may be 01 11 0, where the first two "01" indicate that the identifier of the first cell is 01, the middle two "11" indicate that both the DRX function and the DTX function are enabled, and the last "0" indicates that the first terminal in the connected mode transmits data by using the C-DRX mode 1.

In another example, the first indication information carried in the transmission indication field may be 11 0, where the first two "11" indicate that both the DRX function and the DTX function are enabled, and the last "0" indicates that the terminal in the connected mode transmits data by using the C-DRX mode 1. In this case, the cell information such as the identifier of the first cell may be implicitly carried in scrambling code of a PDCCH.

In another example, the first indication information carried in the transmission indication field may be 11, and "11" indicates that both the DRX function and the DTX function are enabled. In this case, the cell information such as the identifier of the first cell may be implicitly carried in the scrambling code of the PDCCH.

In another example, when the network device indicates, in a preconfiguration manner or according to the protocol specification, that the first indication information includes only the bit that indicates the enabled state of the DRX function of the cell, the first indication information carried in the transmission indication field may be 1. In this case, the first indication information indicates that the DRX function of the cell is enabled. When the network device indicates, in the preconfiguration manner or according to the protocol specification, that the first indication information includes only the bit that indicates the enabled state of the DTX function of the cell, the first indication information carried in the transmission indication field may be 1. In this case, the first indication information indicates that the DTX function of the cell is enabled. In this case, the cell information such as the identifier of the first cell may be implicitly carried in the scrambling code of the PDCCH.

In another example, the first indication information carried in the transmission indication field may be 11 01, where the first two "11" indicate that both the DRX function and the DTX function are enabled, and the third "0" indicates that the terminal in the connected mode transmits data by using the C-DRX mode 1. The last "1" indicates that the terminal in the non-connected mode transmits data by using the idle-state DRX mode 2. In this case, the cell information such as the identifier of the first cell may be implicitly carried in the scrambling code of the PDCCH.

In another example, the first indication information carried in the transmission indication field may be 11 10 01, where the first two "11 " indicate that both the DRX function and the DTX function are enabled; in the middle two "10", "1" indicates that the network device is to receive data by using a cell DRX mode 2, and "0" indicates that the network device is to send data by using a cell DTX mode 1; and in the last two "01", "0" indicates that the terminal in the connected mode transmits data by using the C-DRX mode 1, and "1" indicates that the terminal in the non-connected mode transmits data by using the idle-state DRX mode 2. In this case, the cell information such as the identifier of the first cell may be implicitly carried in the scrambling code of the PDCCH.

Optionally, when the reserved field in the PEI DCI is used to carry the first indication information, considering that the PEI DCI further includes another indication field, to enable the first terminal to better parse out the first indication information from the PEI DCI, the network device may further send the configuration information to the first terminal in advance before sending the first indication information. The configuration information indicates, in the PEI DCI, a start location and a length of the transmission indication field that carries the first indication information. Based on this, after subsequently receiving the PEI DCI on the PEI occasion corresponding to the first terminal, the first terminal may determine a location of the transmission indication field in the PEI DCI based on the start location and the length that are indicated by the configuration information, and obtain the first indication information from the transmission indication field.

For example, it can be learned from the foregoing description that, for the terminals in the non-connected mode, the network device sends a SIB to these terminals. Based on this, in this embodiment of this application, the network device may carry the configuration information in the SIB and send the SIB to the first terminal.

The configuration information may include an offset value between the transmission indication field and a 1^{st} bit in the PEI DCI, and the offset value indicates the start location of the transmission indication field in the PEI DCI. In addition, the configuration information may further include a quantity of bits of the transmission indication field, to indicate the length of the transmission indication field.

In another possible implementation, the network device may send the first indication information in a third time unit in which a time difference between the third time unit and the second time unit is not less than the preset time threshold. Correspondingly, the first terminal may receive the first indication information in the third time unit.

The network device may carry the first indication information by using special-purpose DCI. In this case, the third time unit is a time domain resource allocated for sending the special-purpose DCI. In this case, the network device may deliver location information of the third time unit to the first terminal in advance. Alternatively, the location information of the third time unit may be statically preconfigured in the first terminal. Correspondingly, the first terminal may monitor, at a corresponding location based on the location information, the special-purpose DCI that carries the first indication information.

Optionally, the network device may alternatively reuse the currently existing DCI to carry the first indication information. In this case, the third time unit may be a time domain resource used to send corresponding DCI. In this case, the first terminal may receive the corresponding DCI on the corresponding time domain resource, and obtain the first indication information from the DCI.

In an example, the existing DCI may be the PEI DCI. In this case, the third time unit may be a PEI occasion, and the first terminal may monitor, on the PEI occasion, the PEI DCI that carries the first indication information. For a related implementation in which the PEI DCI carries the first indication information, refer to the foregoing description. Details are not described herein again. In conclusion, in a possible implementation of this embodiment of this application, regardless of a time difference between the PEI occasion and the second time unit, that is, regardless of whether the time difference between the PEI occasion and the second time unit is greater than, less than, or equal to the preset time threshold, the network device may reuse the PEI DCI to carry the first indication information.

Optionally, it can be learned from the foregoing description that, for the terminals in the non-connected mode, the network device sends a paging message to these terminals. The paging message includes a paging physical downlink control channel (physical downlink control channel, PDCCH) and a paging physical downlink shared channel (physical downlink shared channel, PDSCH), and the paging PDCCH may be used to carry control information that indicates the paging PDSCH. Based on this, in this embodiment of this application, the network device may use a reserved field in the paging PDCCH to carry the first indication information. Correspondingly, the first terminal may monitor and receive the PDCCH on a paging PDCCH monitoring occasion, and obtain the first indication information from the PDCCH.

Optionally, the paging PDSCH includes a medium access control control element (medium access control control element, MAC-CE), and the MAC-CE may be used to carry control information at a MAC layer. Based on this, in this embodiment of this application, the network device may alternatively use the MAC-CE of the paging PDSCH to carry the first indication information. Correspondingly, the first terminal may monitor and receive the PDSCH on the paging PDSCH monitoring occasion, and obtain the first indication information from the MAC-CE of the PDSCH.

It should be noted that when the existing DCI is reused to carry the first indication information, because the existing DCI further carries other control information, in this embodiment of this application, the network device may also indicate a location of the first indication information in the corresponding DCI by referring to the foregoing method for delivering the configuration information to the first terminal in advance, so that the first terminal obtains the first indication information from the corresponding DCI.

Step 402: The first terminal performs transmission of other indication information or data based on the first indication information.

In this embodiment of this application, the transmission may include at least one of sending and receiving.

After receiving the first indication information, the first terminal may perform transmission of the other indication information or the data in the first cell based on the first indication information.

For example, if the first indication information indicates that the DRX function of the first cell is enabled, the first terminal sends uplink data in the active duration and does not send the uplink data in the inactive duration of the DRX cycle of the first cell.

If the DRX function of the first cell is enabled, it indicates that the network device enables the discontinuous reception function of the first cell. In this case, the network device receives data in the first cell in the active duration and does not receive data in the first cell in the inactive duration of the DRX cycle of the first cell. Based on this, if the first terminal has data to be sent to the network device, the first terminal may determine, based on a preconfigured DRX parameter of the network device, a location of the DRX cycle of the first cell, and a location of the active duration and a location of the inactive duration in the DRX cycle. Then, based on the location of the DRX cycle and the locations of the active duration and the inactive duration in the DRX cycle, to-be-sent uplink data is sent to the network device in the first cell in the active duration, and the uplink data is not sent in the first cell in the inactive duration.

Optionally, if the DRX modes or the configuration information of the plurality of cells is preconfigured in the first terminal, and the first indication information further indicates a target DRX mode or target configuration information to be used by the network device, when there is data to be sent to the network device, the first terminal may obtain a DRX parameter corresponding to the target DRX mode or the target configuration information; and then based on a location of a DRX cycle and locations of an active duration and an inactive duration in the DRX cycle indicated by the DRX parameter, sends to-be-sent uplink data to the network device in the first cell in the active duration and does not send the uplink data in the first cell in the inactive duration.

Optionally, if the first indication information indicates that the DTX function of the first cell is enabled, downlink data is received in the active duration and the downlink data is not received in the inactive duration of the DTX cycle of the first cell.

If the DTX function of the first cell is enabled, it indicates that the network device enables the discontinuous transmission function of the first cell. In this case, the network device sends the downlink data or the other indication information in the first cell in the active duration and does not send the downlink data or the other indication information in the first cell in the inactive duration of the DTX cycle of the first cell. Based on this, the first terminal may determine, based on a preconfigured DTX parameter of the network device, a location of the DTX cycle of the first cell, and a location of the active duration and a location of the inactive duration in the DTX cycle. Then, based on the location of the DTX cycle and the locations of the active duration and the inactive duration in the DTX cycle, the downlink data or the other indication information is monitored in the first cell in the active duration, and the downlink data or the other indication information is not monitored in the first cell in the inactive duration. The downlink data may include the PDSCH in the paging message, and the other indication information may include the paging PDDCH.

Optionally, if the DTX modes or the configuration information of the plurality of cells is preconfigured in the first terminal, and the first indication information further indicates a target DTX mode or target configuration information to be used by the network device, the first terminal may obtain a DTX parameter corresponding to the target DTX mode or the target configuration information; and then based on a location of the DTX cycle indicated by the DTX parameter and locations of the active duration and the inactive duration in the DTX cycle, monitors the downlink data or the other indication information in the first cell in the active duration and does not monitor the downlink data or the other indication information in the first cell in the inactive duration.

Optionally, if the first indication information further indicates the first receiving mode, after switching from the non-connected mode to the connected mode, the first terminal may further receive the downlink data or the other indication information based on the first receiving mode.

It can be learned from the description in step 401 that the first indication information may further indicate a specific C-DRX mode used by the first terminal to perform data transmission with the network device after the first terminal switches to the connected mode. Based on this, after the first terminal receives the first indication information, if the first terminal reestablishes a radio resource control (radio resource control, RRC) connection to the network device, the first terminal switches from the non-connected mode to the connected mode. In this case, the first terminal may receive, by using the first receiving mode indicated in the first indication information, the downlink data or the other indication information delivered by the network device. The first receiving mode is one of the at least two C-DRX modes preconfigured for the first terminal.

Specifically, the first terminal may determine, based on a C-DRX parameter of the preconfigured first receiving mode, a location of a C-DRX cycle of the first terminal, a location of active duration and a location of inactive duration in the C-DRX cycle. Then, in the active duration of the C-DRX cycle, the first terminal monitors and receives the downlink data or the other indication information delivered by the network device, and in the inactive duration of the C-DRX cycle, the first terminal does not monitor the downlink data or the other indication information.

Optionally, if the first indication information further indicates the second receiving mode, when the first terminal is in the non-connected mode, the first terminal may further monitor a PO based on the second receiving mode, to receive a paging message.

In this embodiment of this application, the network device may send the first indication information to the terminal in the non-connected mode, to indicate that the DRX function and/or the DTX function of the first cell in which the terminal is located are/is enabled or disabled. In this way, the terminal in the non-connected mode may perform transmission of data or other indication information with the network device based on the first indication information. It can be learned that in this embodiment of this application, cell DRX and/or cell DTX are/is indicated to the terminal in the non-connected mode, to reduce power consumption when the network device performs data transmission with the terminal in the non-connected mode.

In addition, in this embodiment of this application, the first time unit used by the network device to send the first indication information may be, to the greatest extent, close to the second time unit in which the SSB is sent. In this way, sending time of the network device may be centralized to the greatest extent, that is, the network device completes sending in a time period as short as possible, so that sending is disabled in a time period as long as possible, to achieve a better energy saving effect.

Finally, in this embodiment of this application, the network device may reuse the PEI DCI sent on the FEI occasion to carry the first indication information, and there is no need to redefine special-purpose DCI to carry the first indication information, to reduce DCI overheads. In addition, the terminal may obtain the first indication information by monitoring the PEI occasion, without monitoring the first indication information on another occasion. This reduces power consumption of the terminal.

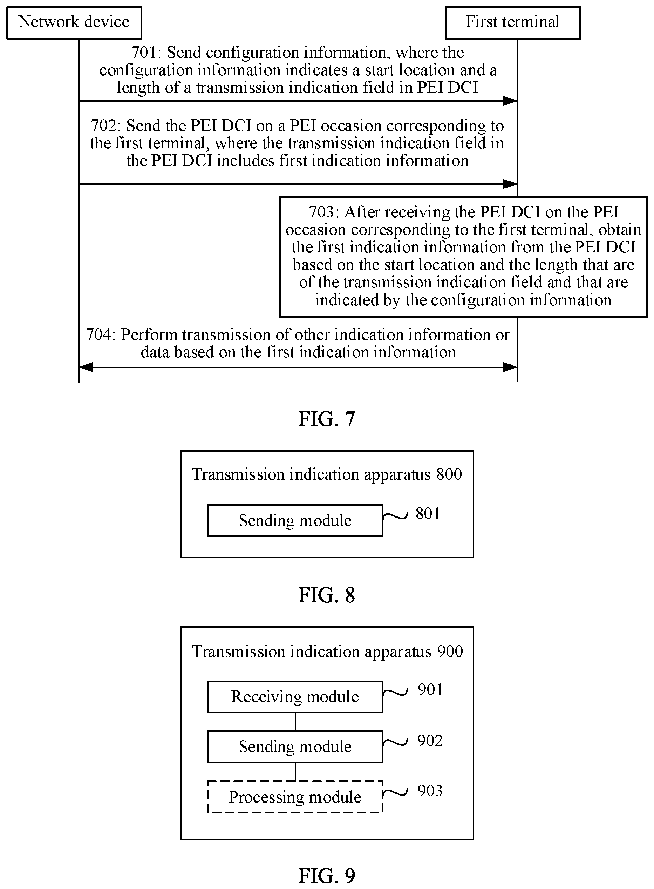

Based on the transmission indication method provided in the foregoing embodiments, an embodiment of this application further provides a detailed process of transmitting an indication between a network device and a first terminal. As shown in FIG. 7, the process includes the following steps.

Step 701: The network device sends configuration information to the first terminal, where the configuration information indicates a start location and a length of a transmission indication field in PEI DCI.

Step 702: The network device sends the PEI DCI to the first terminal on a PEI occasion corresponding to the first terminal, where the transmission indication field in the PEI DCI includes first indication information.

Step 703: After receiving the PEI DCI on the PEI occasion corresponding to the first terminal, the first terminal obtains the first indication information from the PEI DCI based on the start location and the length that are of the transmission indication field and that are indicated by the configuration information.

Step 704: The first terminal performs transmission of other indication information or data with the network device based on the first indication information.

For detailed implementations of step 701 to step 704, refer to related descriptions in the foregoing embodiment. Details are not described herein again in this embodiment of this application.

The following describes a transmission indication apparatus provided in an embodiment of this application.

FIG. 8 is a diagram of a structure of a transmission indication apparatus according to an embodiment of this application. The transmission indication apparatus may be deployed in the network device in the foregoing embodiment. Refer to FIG. 8. The transmission indication apparatus 800 may include a sending module 801. The sending module 801 is configured to perform step 401 in the foregoing embodiment.

Optionally, the sending module 801 is specifically configured to:
send first indication information to a first terminal in a first time unit, where a time difference between the first time unit and a second time unit is less than a preset time threshold, and the second time unit is a time unit in which an SSB is sent.

Optionally, the sending module 801 is specifically configured to:
send PEI DCI to the first terminal on a PEI occasion corresponding to the first terminal, where the PEI DCI includes a transmission indication field, and the transmission indication field is used to carry the first indication information.

Optionally, the sending module 801 is further configured to:
send configuration information to the first terminal, where the configuration information indicates a start location and a length of the transmission indication field in the PEI DCI.

Optionally, the first indication information further indicates a first receiving mode, at least two connected-mode discontinuous reception C-DRX modes are preconfigured for the first terminal, and the at least two C-DRX modes include the first receiving mode.

In this embodiment of this application, the network device may send the first indication information to the terminal in a non-connected mode, to indicate that a DRX function and/or a DTX function of a first cell in which the terminal is located are/is enabled or disabled. In this way, the terminal in the non-connected mode may perform transmission of data or other indication information with the network device based on the first indication information. It can be learned that in this embodiment of this application, cell DRX and/or cell DTX are/is indicated to the terminal in the non-connected mode, to reduce power consumption when the network device performs data transmission with the terminal in the non-connected mode.

FIG. 9 is a diagram of a structure of another transmission indication apparatus according to an embodiment of this application. The transmission indication apparatus may be deployed in the first terminal in the foregoing embodiment. Refer to FIG. 9. The transmission indication apparatus 900 may include a receiving module 901 and a sending module 902.

The receiving module 901 is configured to perform step 401 in the foregoing embodiment.

The sending module 902 is configured to perform step 402 in the foregoing embodiment, or the receiving module 901 is further configured to perform step 402 in the foregoing embodiment.

Optionally, the receiving module 901 is specifically configured to:
receive first indication information in a first time unit, where a time difference between the first time unit and a second time unit is less than a preset time threshold, and the second time unit is a time unit in which an SSB is received.

Optionally, the receiving module 901 is specifically configured to:
receive PEI DCI on a PEI occasion corresponding to the first terminal, where the PEI DCI includes a transmission indication field, and the transmission indication field is used to carry the first indication information.

Optionally, the apparatus 900 further includes a processing module 903.

The receiving module 901 is further configured to: receive configuration information, where the configuration information indicates a start location and a length of the transmission indication field in the PEI DCI.

The processing module 903 is configured to: obtain the first indication information from the PEI DCI based on the start location and the length of the transmission indication field.

Optionally, the sending module 902 is specifically configured to:
if the first indication information indicates that a DRX function of a first cell is enabled, send uplink data in active duration and skip sending the uplink data in inactive duration of a DRX cycle of the first cell.

Optionally, the receiving module 901 is specifically configured to:
if the first indication information indicates that a DTX function of the first cell is enabled, receive other indication information or downlink data in active duration and skip receiving the other indication information or the downlink data in inactive duration of a DTX cycle of the first cell.

Optionally, the first indication information further indicates a first receiving mode, at least two connected-mode discontinuous reception C-DRX modes are preconfigured for the first terminal, and the at least two C-DRX modes include the first receiving mode.

Optionally, the receiving module 901 is specifically configured to:
after the first terminal switches from a non-connected mode to a connected mode, receive the downlink data or the other indication information based on the first receiving mode.

In this embodiment of this application, the first terminal in the non-connected mode may receive the first indication information sent by the network device, and perform transmission of the other indication information or the data with the network device based on an enabled state, indicated by the first indication information, of the DRX function and/or the DTX function of the first cell in which the first terminal is located. It can be learned that in this embodiment of this application, cell DRX and/or cell DTX are/is indicated to the terminal in the non-connected mode, to reduce power consumption when the network device performs data transmission with the terminal in the non-connected mode.

It should be noted that module division in various transmission indication apparatuses in the foregoing embodiments is an example, and is merely logical function division. During actual implementation, there may be another division manner. In addition, functional modules in embodiments of this application may be integrated into one processor, each of the modules may exist alone physically, or two or more modules may be integrated into one module. The integrated module may be implemented in a form of hardware, or may be implemented in a form of a software functional module.

If the integrated module is implemented in a form of a software functional module and is sold or used as an independent product, the integrated module may be stored in a computer-readable storage medium. Based on such an understanding, the technical solutions of embodiments of this application essentially, or the part contributing to the conventional technology, or all or a part of the technical solutions may be implemented in a form of a software product. The computer software product is stored in a storage medium and includes several instructions for instructing a network device (which may be a router or a switch) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the transmission indication apparatus provided in the foregoing embodiments and the transmission indication method embodiments belong to a same concept. For a specific implementation process of the transmission indication apparatus, refer to the method embodiment. Details are not described herein again.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semi-conductive medium (for example, a solid-state disk (solid-state disk, SSD)).

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof. In embodiments of this application, "at least one" means one or more, and "a plurality of" means two or more. "And/or" describes an association relationship between associated objects and may indicate three relationships. For example, A and/or B may indicate the following cases: Only A exists, both A and B exist, and only B exists, where A and B may be singular or plural. In text descriptions of embodiments of this application, the character "/" usually indicates an "or" relationship between associated objects. In this application, "first", "second", and various numbers are used for differentiation for ease of description, rather than limiting the scope of embodiments of this application, for example, are intended to distinguish between different messages but not to describe a specific order or sequence.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A transmission indication method, wherein the method comprises:
sending first indication information to a first terminal, wherein the first indication information indicates that a discontinuous reception DRX function and/or a discontinuous transmission DTX function of a first cell in which the first terminal is located are/is enabled or disabled, the first terminal is in a non-connected mode, and the non-connected mode comprises an idle state and an inactive state.

2. The method according to claim 1, wherein sending the first indication information to the first terminal comprises:
sending PEI downlink control information DCI to the first terminal on a paging early indication PEI occasion corresponding to the first terminal, wherein the PEI DCI comprises a transmission indication field, and the transmission indication field is used to carry the first indication information.

3. The method according to claim 2, wherein before sending the first indication information to the first terminal, the method further comprises:
sending configuration information to the first terminal, wherein the configuration information indicates a start location and a length of the transmission indication field in the PEI DCI.

4. The method according to claim 1, wherein sending the first indication information to the first terminal comprises:
sending the first indication information to the first terminal in a first time unit, wherein a time difference between the first time unit and a second time unit is less than a preset time threshold, and the second time unit is a time unit in which a synchronization signal block SSB is sent.

5. The method according to any one of claims 1 to 4, wherein the first indication information further indicates a first receiving mode, at least two connected-mode discontinuous reception C-DRX modes are preconfigured for the first terminal, and the at least two C-DRX modes comprise the first receiving mode.

6. A transmission indication method, wherein the method comprises:
receiving first indication information, wherein the first indication information indicates that a DRX function and/or a DTX function of a first cell in which a first terminal is located are/is enabled or disabled, the first terminal is in a non-connected mode, and the non-connected mode comprises an idle state and an inactive state; and
performing transmission of other indication information or data based on the first indication information.

7. The method according to claim 6, wherein receiving the first indication information comprises:
receiving PEI downlink control information DCI on a paging early indication PEI occasion corresponding to the first terminal, wherein the PEI DCI comprises a transmission indication field, and the transmission indication field is used to carry the first indication information.

8. The method according to claim 7, wherein the method further comprises:
receiving configuration information, wherein the configuration information indicates a start location and a length of the transmission indication field in the PEI DCI; and
after receiving the PEI downlink control information DCI on the paging early indication PEI occasion corresponding to the first terminal, the method further comprises:
obtaining the first indication information from the PEI DCI based on the start location and the length of the transmission indication field.

9. The method according to claim 6, wherein receiving the first indication information comprises:
receiving the first indication information in a first time unit, wherein a time difference between the first time unit and a second time unit is less than a preset time threshold, and the second time unit is a time unit in which a synchronization signal block SSB is received.

10. The method according to any one of claims 6 to 9, wherein performing transmission of the other indication information or the data based on the first indication information comprises:
if the first indication information indicates that the DRX function of the first cell is enabled, sending uplink data in active duration and skipping sending the uplink data in inactive duration of a DRX cycle of the first cell.

11. The method according to any one of claims 6 to 10, wherein performing transmission of the other indication information or the data based on the first indication information comprises:
if the first indication information indicates that the DTX function of the first cell is enabled, receiving the other indication information or downlink data in active duration and skipping receiving the other indication information or the downlink data in inactive duration of a DTX cycle of the first cell.

12. The method according to any one of claims 6 to 11, wherein the first indication information further indicates a first receiving mode, at least two connected-mode discontinuous reception C-DRX modes are preconfigured for the first terminal, and the at least two C-DRX modes comprise the first receiving mode.

13. The method according to claim 12, wherein performing transmission of the other indication information or the data based on the first indication information comprises:
after the first terminal switches from the non-connected mode to a connected mode, receiving the downlink data or the other indication information based on the first receiving mode.

14. A transmission indication apparatus, wherein the apparatus comprises at least one module, and the at least one module is configured to perform the transmission indication method according to any one of claims 1 to 13.

15. A communication device, wherein the communication device comprises a processor, and the processor is configured to execute at least one program instruction or code stored in a memory, to implement the transmission indication method according to any one of claims 1 to 13.

16. A computer-readable storage medium, wherein the computer-readable storage medium stores instructions, and when the instructions are run on a communication device, the communication device is enabled to perform the transmission indication method according to any one of claims 1 to 13.
